# EUROPÄISCHE PATENTSCHRIFT

(11) **EP 2 952 087 B1**
(45) Veröffentlichungstag und Bekanntmachung des Hinweises auf die Patenterteilung: **01.11.2017**
(21) Anmeldenummer: 15159128.6
(22) Anmeldetag: 16.03.2015
(51) Int. Cl.: A01D 69/00, A01D 43/08, A01D 69/03

(54) **Antriebssystem für eine selbstfahrende Erntemaschine**
Drive system for a self-propelled harvesting machine
Système d'entraînement d'une moissonneuse automotrice

(30) Priorität: 06.06.2014 DE 102014108026
(43) Veröffentlichungstag der Anmeldung: 09.12.2015
(73) Patentinhaber: CLAAS Selbstfahrende Erntemaschinen GmbH, 33428 Harsewinkel (DE)
(72) Erfinder: Furmaniak, Jan, 48145 Münster (DE); Krauß, Andreas, 97456 Pfändhausen (DE); Schiewer, Stefan, 32791 Lage (DE)

(56) Entgegenhaltungen:
- WO-A1-2008/053607
- WO-A1-2013/018696
- DE-A1-102004 042 113
- DE-A1-102009 028 056
- DE-B- 1 221 480
- GB-A- 703 617
- US-A1- 2006 272 496

## Beschreibung

Die vorliegende Erfindung betrifft ein Antriebssystem für eine selbstfahrende Erntemaschine, umfassend einen als Verbrennungsmotor ausgeführten Antriebsmotor, ein von dem Antriebsmotor angetriebenes Verteilergetriebe mit einer an einer Antriebswelle angeordneten ersten Abtriebsriemenscheibe, welche mittels eines ersten Riemens zumindest eine Antriebsriemenscheibe eines Arbeitsorganes treibt, und mindestens eine Hydraulikpumpe zum Antrieb zumindest eines weiteren Arbeitsorganes, wobei mittels eines zweiten Riemens das Verteilgetriebe trieblich mit der mindestens einen Hydraulikpumpe verbunden ist, wobei dem Verteilergetriebe eine zweite Abtriebsriemenscheibe zugeordnet ist, die mittels des zweiten Riemens die mindestens eine Hydraulikpumpe antreibt. Weiterhin betrifft die Erfindung einen Feldhäcksler mit dem Antriebssystem.

Die DE 10 2009 028 056 A1 zeigt eine selbstfahrende landwirtschaftliche Erntemaschine mit Arbeitsorganen, deren Antrieb über einen Treibriemen erfolgt. Der Treibriemen wird durch eine Riemenscheibe mit horizontal und quer zur Vorwärtsrichtung orientierter Drehachse angetrieben, die wahlweise mit einem von zwei Verbrennungsmotoren oder mit beiden Verbrennungsmotoren in Antriebsverbindung steht oder bringbar ist.
Aus der EP 1 875 793 A1 ist eine als Feldhäcksler ausgeführte selbstfahrende Erntemaschine bekannt, welche ein Vorsatzgerät zur Aufnahme von Erntegut sowie ein Einzugsorgan aufweist, welches von dem Vorsatzgerät aufgenommenes Erntegut einer dem Einzugsorgan nachgeordneten Häckseleinrichtung des Feldhäckslers, die eine von einer Antriebswelle angetriebene Häckseltrommel umfasst, zuführt. Der Feldhäcksler weist ein Antriebssystem auf, das ein von einem Verbrennungsmotor angetriebenes Verteilergetriebe mit einer Abtriebsriemenscheibe umfasst. Die Abtriebsriemenscheibe ist von einem als Hauptriemen ausgeführten Antriebsriemen umschlungen, welcher unter anderem die Häckseleinrichtung sowie eine dem Antrieb des Einzugsorganes dienende Hydraulikpumpe antreibt. Der Antrieb des Vorsatzgerätes erfolgt durch ein der Antriebswelle der Häckseltrommel zugeordnetes Vorsatzgetriebe. Als nachteilig an diesem Antriebssystem hat sich gezeigt, dass der Antrieb der Hydraulikpumpe durch den Hauptriemen, der eine hohe Antriebsdrehzahl erfordert, durch eine Pumpenantriebsriemenscheibe kleinen Durchmessers realisiert ist, was, neben der Belastung durch den Antrieb der Hydraulikpumpe an sich, zu einer zusätzlichen Belastung durch eine erhöhte Ermüdung des Hauptriemens führt.

Der Erfindung liegt somit die Aufgabe zu Grunde, ein Antriebssystem der eingangs genannten Art derart weiterzubilden, dass eine längere Lebensdauer des Antriebsriemens erreicht wird.

Diese Aufgabe wird erfindungsgemäß durch die kennzeichnenden Merkmale des Anspruches 1 erreicht.

Vorteilhafte Weiterbildungen der Erfindung sind Gegenstand der Unteransprüche.

Gemäß dem Anspruch 1 wird vorgeschlagen, dass mittels eines zweiten Riemens das Verteilgetriebe trieblich mit der mindestens einen ersten Hydraulikpumpe verbunden ist. Es ist eine Aufteilung in einen Hauptantriebsstrang, der unmittelbar mechanisch angetriebene Arbeitsorgane umfasst, und einen Nebenantriebsstrang, der hydraulisch angetriebene Arbeitsorgane umfasst, vorgesehen. Die erste Abtriebsriemenscheibe, die zumindest eine Antriebsriemenscheiben sowie der erste Riemen bilden einen Hauptantriebsstrang. Die mindestens eine erste Pumpenantriebsriemenscheibe sowie der zweite Riemen bilden einen Nebenantriebsstrang. Die erste Abtriebsscheibe kann eine der Riemenbreiten des ersten und des zweiten Riemens entsprechende Breite aufweisen, so dass der erste Riemen und der Riemen die zumindest eine erste Abtriebsriemenscheibe umschlingen können. Durch die Aufteilung in einen Hauptantriebsstrang und einen Nebenantriebsstrang ausgehend von dem Verteilergetriebe, ist die im Hauptantriebsstrang mittels des ersten Riemens zu übertragende Leistung gegenüber dem Antriebssystem gemäß dem Stand der Technik reduziert, in welchen auch die Hydraulikpumpe integriert ist. Zudem entfällt der die Lebensdauer einschränkende Einfluss der mit hoher Drehzahl angetriebenen Riemenscheibe für die mindestens eine Hydraulikpumpe auf den ersten Riemen. Ein weiterer Vorteil dieser Anordnung im Antriebssystem besteht in einer Reduzierung der Achslasten im Hauptantrieb. Darüber hinaus treten beim Bremsen keine Lastwechsel im Hauptantriebsstrang auf. Erfindungsgemäss ist dem Verteilergetriebe eine zweite Abtriebsriemenscheibe zugeordnet, die mittels des zweiten Riemens die mindestens eine erste Hydraulikpumpe antreibt.

Insbesondere kann die zweite Abtriebsriemenscheibe parallel zu der ersten Abtriebsriemenscheibe angeordnet sein. Vorzugsweise ist die zweite Abtriebsriemenscheibe koaxial zu ersten Abtriebsriemenscheibe angeordnet. Dabei kann die zweite Abtriebsriemenscheibe auf einer gemeinsamen Abtriebswelle des Verteilergetriebes angeordnet sein. Hierdurch lässt sich eine gute Ausnutzung des zur Verfügung stehenden Bauraumes erreichen. Erfindungsgemäss treibt der zweite Riemen eine erste Hydraulikpumpe zum Antreiben des Vorsatzgerätes und eine zweite Hydraulikpumpe zum Antreiben des Einzugsorganes an. Die Separierung der Antriebe für das Vorsatzgerät und das Einzugsorgan vom Hauptantrieb hat den Vorteil, dass die zu übertragende Leistung im Hauptantriebsstrang reduziert ist.

In bevorzugter Weiterbildung können die erste Hydraulikpumpe und die zweite Hydraulikpumpe als Tandempumpe ausgeführt sein, die von einer gemeinsamen ersten Pumpenantriebsriemenscheibe angetrieben sind.

Des Weiteren kann der zweite Riemen eine zweite Pumpenantriebsriemenscheibe zum Antreiben einer dritten Hydraulikpumpe treiben, die dem Antrieb eines hydraulischen Aufsammelantriebes eines als Pick-Up ausgeführten Vorsatzgerätes dient. Die zweite Pumpenantriebsriemenscheibe hat den Vorteil, dass sie zu einer besseren Führung des zweiten Riemens beiträgt.

Hierzu kann die zweite Pumpenantriebsriemenscheibe durch eine Kupplung schaltbar sein. Dies hat den Vorteil, dass die Antriebsleistung der dritten Pumpe nur bei Bedarf zur Verfügung steht, das heißt, wenn als Vorsatzgerät eine Pick-Up an das Einzugsorgan der landwirtschaftlichen Erntemaschine angekoppelt ist. In den übrigen Fällen lässt sich die zweite Pumpenantriebsriemenscheibe durch eine entsprechende Betätigung der Kupplung von dem zweiten Riemenentkoppeln, so dass die erforderliche Antriebsleistung reduziert wird.

Vorzugsweise können die erste Pumpe, die zweite Pumpe und die dritte Pumpe auf einer gemeinsamen Konsole angeordnet sein. Hierdurch kann die Montierbarkeit und Wartung vereinfacht werden.

Weiterhin betrifft die Erfindung gemäß Anspruch 9 einen Feldhäcksler mit einem Antriebssystem nach einem der Ansprüche 1 bis 8.

Die vorliegende Erfindung wird nachstehend anhand eines in den Zeichnungen dargestellten Ausführungsbeispieles näher erläutert.

Es zeigen:
- Fig. 1: eine schematische Ansicht einer selbstfahrenden Erntemaschine;
- Fig. 2: eine schematische Ansicht eines Antriebssystems der Erntemaschine gemäß Fig.1;
- Fig. 3: eine schematische Teilansicht des Antriebssystems gemäß Fig. 2 von oben;
- Fig. 4: eine schematische Teilansicht des Antriebssystems gemäß Fig. 3 von der Seite.

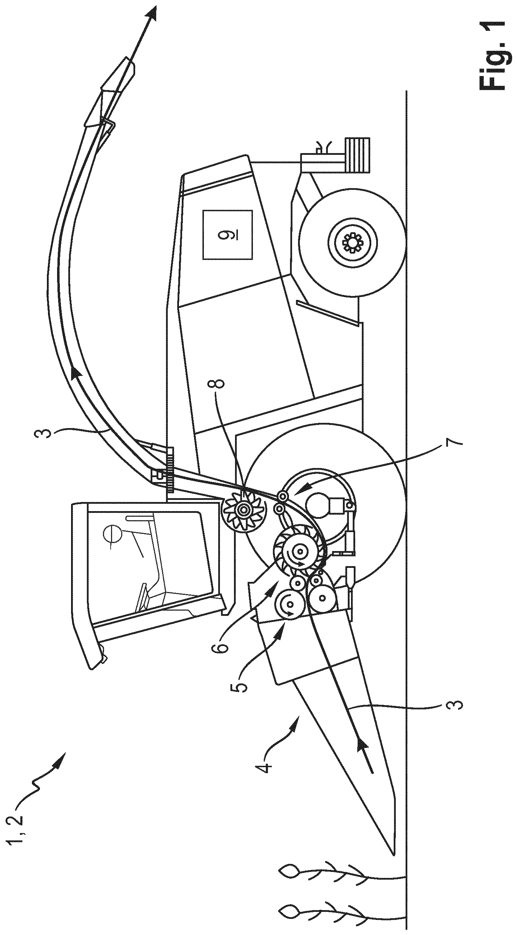

In Fig. 1 ist in schematischer Seitenansicht eine als Feldhäcksler 2 ausgeführte selbstfahrende Erntemaschine 1 bei der Ernte auf dem Feld dargestellt. Der Feldhäcksler 2 erntet beziehungsweise nimmt mittels eines Vorsatzgerätes 4 Pflanzen vom Feld auf, um das erhaltene Erntegut 3 in Form eines Erntegutstroms (in Fig. 1 als mit Pfeilen versehene Linie angedeutet) durch Arbeitsorgane, die als Bearbeitungs- und Förderorgane des Feldhäckslers 2 ausgeführt sind, zu führen und mittels einer Überladeeinrichtung in einen - nicht dargestellten - Ladebehälter abzuwerfen. Die Bearbeitungs- und Förderorgane des Feldhäckslers 2 umfassen unter anderem ein Einzugsorgan 5, welches aus mehreren, in einem Einzugsgehäuse hintereinander angeordneten Walzenpaaren besteht. Weiterhin eine Häckseleinrichtung 6, die mittels einer rotierenden, mit Messern ausgestatteten Häckseltrommel das Erntegut in Zusammenwirkung mit einer Gegenschneide zerkleinert, eine der Häckseleinrichtung 6 in einem Förderschacht in Gutstromrichtung nachgelagerte Konditioniereinrichtung 7 sowie einen der Konditioniereinrichtung 7 im Förderschacht in Gutstromrichtung nachgelagerten Auswurfbeschleuniger 8, welcher das Erntegut 3 mittels rotierender Wurfpaddel für den sicheren Auswurf durch die Überladeeinrichtung beschleunigt. Das Vorsatzgerät 4, das Einzugsorgan 5, die Häckseleinrichtung 6, die Konditioniereinrichtung 7 sowie der Auswurfbeschleuniger 8 werden nachfolgend als Arbeitsorgane bezeichnet. Im Heck des Feldhäckslers 2 ist ein Verbrennungsmotor 9 angeordnet, der dem Antrieb vorgenannten Arbeitsorgane 4, 5, 6, 7, 8 des Feldhäckslers 2 dient.

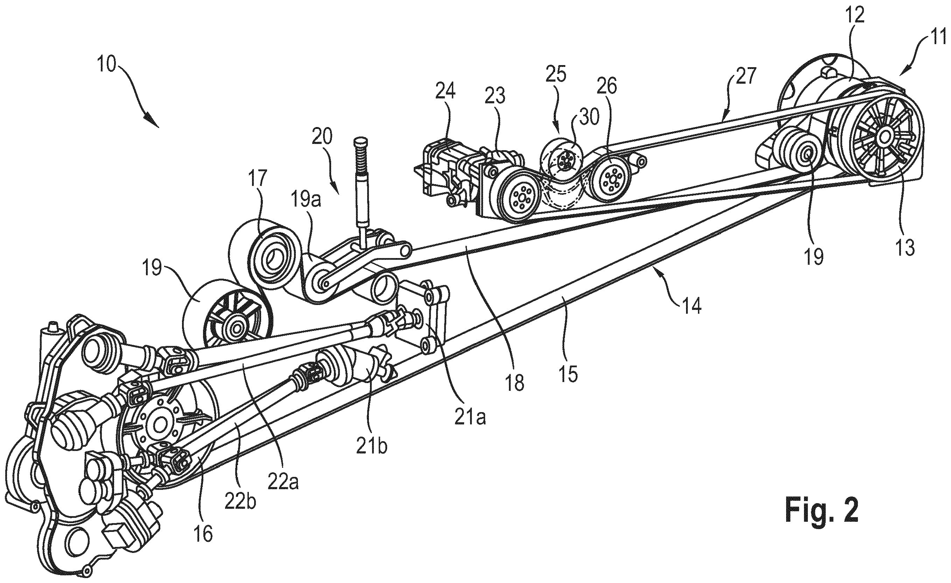

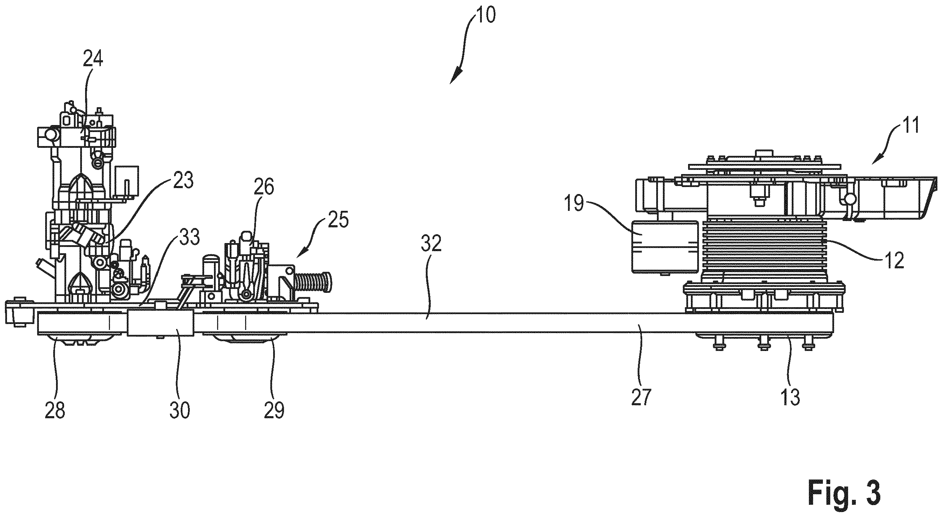

In Fig. 2 ist eine schematische Ansicht eines erfindungsgemäßen Antriebssystems 10 des als Feldhäcksler 2 ausgeführten Erntemaschine 1 dargestellt. Von dem Verbrennungsmotor 9 wird durch eine Abtriebswelle ein Verteilergetriebe 11 angetrieben. Das Verteilergetriebe 11 umfasst eine erste Abtriebsriemenscheibe 12 und eine zweite Abtriebsriemenscheibe 13, wie insbesondere aus der Darstellung in Fig. 3, die eine schematische Teilansicht des Antriebssystems 10 gemäß Fig. 2 von oben zeigt, ersichtlich ist. Die erste Abtriebsriemenscheibe 12 und die zweite Abtriebsriemenscheibe 13 sind koaxial zueinander auf einer Abtriebswelle des Verteilergetriebes 11 angeordnet. Die erste Abtriebsriemenscheibe 12 ist von einem ersten Riemen 14 umschlungen, der eine erste Antriebsriemenscheibe 16 umschlingt, die dem Antrieb der Häckseleinrichtung 6 dient. Der ersten Antriebsriemenscheibe 16 sind eine Umlenkrolle 19 sowie eine zweite Antriebsriemenscheibe 17 nachgeordnet. Die erste Abtriebsriemenscheibe 12, die erste Antriebsriemenscheibe 16 der Häckseleinrichtung 6, die zweite Antriebsriemenscheibe 17 des nachgelagerten Auswurfbeschleunigeres 8 sowie der erste Riemen 14 bilden einen Hauptantriebsstrang, der dem unmittelbar mechanischen Antrieb der der Häckseleinrichtung 6 in Gutstromrichtung nachgeordneten Arbeitsorgane, der Konditioniereinrichtung 7 sowie dem Auswurfbeschleuniger 8 dient. Ein so genannter Lasttrum 15 erstreckt sich zwischen der ersten Abtriebsriemenscheibe 12 und der ersten Antriebsscheibe 16 der Häckseleinrichtung 6. Die Zugrichtung wird durch einen mit ZR gekennzeichneten Pfeil angegeben. Der Antrieb des nachgelagerten Auswurfbeschleunigeres 8 erfolgt durch die zweite Antriebsriemenscheibe 17. Ein Leertrum 18 verläuft oberhalb des Lasttrums 15. Mittels der Umlenkrolle 19 und einer Spannvorrichtung 20, die mittels einer Spannrolle 19a auf den ersten Riemen 14 einwirkt, wird der erste Riemen 14 geführt und die für die Übertragung der Antriebsleistung vom Verteilergetriebe 11 auf die Arbeitsorgane 4, 5, 6, 7, 8 notwendige Riemenspannung aufgebracht.

Der Antrieb der der Häckseleinrichtung 6 in Gutstromrichtung vorgelagerten Arbeitsorgane, dem Vorsatzgerät 4 sowie dem Einzugsorgan 5 erfolgt durch separate Hydromotoren 21a und 21b, an deren jeweiliger Abtriebswelle eine Gelenkwelle 22a beziehungsweise 22b zur Übertragung des Drehmoments auf das Vorsatzgerät 4 beziehungsweise das Einzugsorgan 5 angeordnet sind.

Der Hydromotor 21a des Einzugorganes 5 und der Hydromotor 21b des Vorsatzgerätes 4 werden von jeweils einer mit diesen durch eine (nicht dargestellte) Hydraulikleitung verbundenen ersten Hydraulikpumpe 23 und zweiten Hydraulikpumpe 24 gespeist. Wie in Fig. 2 angedeutet und in Fig. 3 deutlich zu erkennen ist, sind die erste Hydraulikpumpe 23 und die zweite Hydraulikpumpe 24 als eine so genannte Tandempumpe ausgeführt. Die erste Hydraulikpumpe 23 steht über ihre Antriebswelle mit der ersten Pumpenantriebsriemenscheibe 28 trieblich in Verbindung. Die von der Antriebswelle der ersten Hydraulikpumpe 23 aufgenommene Leitung wird zu einem Teil für den Antrieb des Hydraulikmotors 21a des Einzugorganes 5 verwendet, zu einem anderen Teil dient die aufgenommene Leistung dem Antrieb der zweiten Hydraulikpumpe 24, die ihrerseits den Hydromotor 21b des Vorsatzgerätes 4 speist. Die Anordnung der zweiten, den Hydromotor 21a des Einzugsorganes 5 speisenden Hydraulikpumpe 24 auf der der ersten Pumpenantriebsriemenscheibe 28 abgewandten Seite ist erforderlich, um im Fall der Detektion eines Fremdkörpers im Einzugsorgan 5 dieses sofort anhalten zu können. Dies erfolgt durch die Unterbrechung der Förderung von Hydrauliköl von der der zweiten Hydraulikpumpe 24 zum Hydromotor 21b mittels einer Steuerventilanordnung an dem Hydromotor 21b.

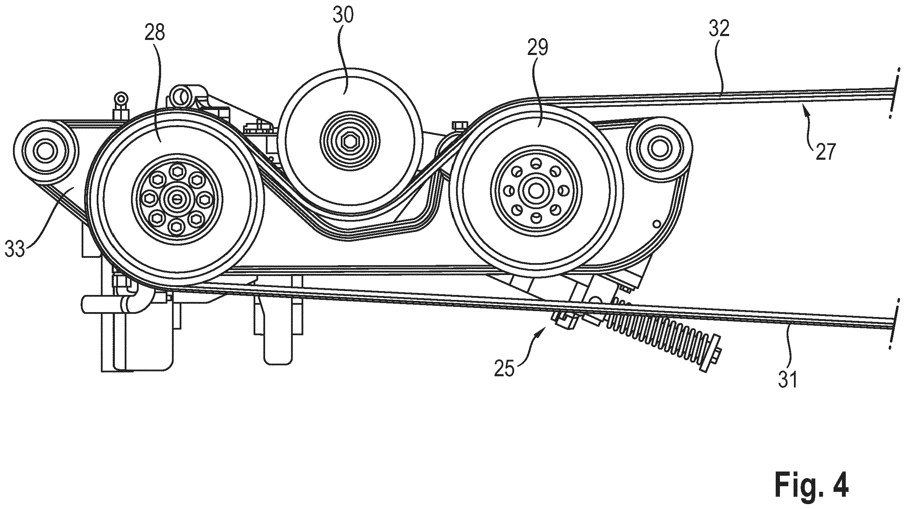

Die erste Hydraulikpumpe 23 und die zweite Hydraulikpumpe 24 werden von einem Riementrieb angetrieben, der einen zweiten Riemen 27 umfasst, der die zweite Abtriebsriemenscheibe 13 sowie eine erste Pumpenantriebsriemenscheibe 28 und eine zweite Pumpenantriebsriemenscheibe 29 umschlingt, wie in der Darstellung gemäß Fig. 4, in der eine schematische Teilansicht des Antriebssystems gemäß Fig. 3 von der Seite dargestellt ist, gezeigt ist. Die zweite Abtriebsriemenscheibe 13, die erste Pumpenantriebsriemenscheibe 28 und die zweite Pumpenantriebsriemenscheibe 29 bilden einen Nebenantriebsstrang, welcher dem Antrieb zumindest der ersten und zweiten Hydraulikpumpe 23 und 24 dient.

Entsprechend der Anordnung des Hauptantriebsstranges ist auch der Nebenantriebsstrang aufgebaut, das heißt, dass der Lasttrum 31 unterhalb des Leertrums 32 verläuft. Die zweite Pumpenantriebsriemenscheibe 29 ist der ersten Pumpenantriebsriemenscheibe 28 nachgelagert angeordnet. Die zweite Pumpenantriebsriemenscheibe 29 treibt eine dritte Hydraulikpumpe 26 an. Zwischen der ersten Pumpenantriebsriemenscheibe 28 und der zweiten Pumpenantriebsriemenscheibe 29 ist eine Spannrolle 30, die mit der Spanneinrichtung 25 gekoppelt ist, angeordnet. Die erste Hydraulikpumpe 23, die zweite Hydraulikpumpe 24 und die dritte Hydraulikpumpe 26 sind auf einer gemeinsamen Konsole 33 angeordnet.

Die dritte Hydraulikpumpe 26 dient im vorliegenden Ausführungsbeispiel dem Antrieb eines hydraulischen Aufsammelantriebes einer als Pick-Up ausgeführten Vorsatzgerätes 4. Der Betrieb der dritten Hydraulikpumpe 26 ist demgemäß nur bei einem Betrieb des Feldhäckslers mit einer Pick-Up als angebautem Vorsatzgerät erforderlich. Um die Leistungsaufnahme im Nebenantriebsstrang gering zu halten, ist die dritte Hydraulikpumpe 26 mittels einer Kupplung zwischen der Antriebswelle der dritten Hydraulikpumpe 26 und der zweiten Pumpenantriebsriemenscheibe 29 vom Nebenantriebsstrang entkoppelbar. Alternativ kann die dritte Hydraulikpumpe 26 als Antrieb einer Komponente eines als Getreideschneidwerk ausgeführten Vorsatzgerätes dienen, welches an den Feldhäcksler 2 ankoppelbar ist.

**Bezugszeichenliste**

| | | | |
|---|---|---|---|
| 1 | Erntemaschine | 27 | Zweiter Riemen |
| 2 | Feldhäcksler | 28 | Erste Pumpenantriebsriemenscheibe |
| 3 | Erntegut | 29 | Zweite Pumpenantriebsriemenscheibe |
| 4 | Vorsatzgerät | 30 | Umlenkrolle |
| 5 | Einzugsorgan | 31 | Lasttrum |
| 6 | Häckseleinrichtung | 32 | Leertrum |
| 7 | Konditioniereinrichtung | 33 | Konsole |
| 8 | Auswurfbeschleuniger | | |
| 9 | Verbrennungsmotor | | |
| 10 | Antriebssystem | | |
| 11 | Verteilergetriebe | | |
| 12 | Erste Abtriebsriemenscheibe | | |
| 13 | Zweite Abtriebsriemenscheibe | | |
| 14 | Erster Riemen | | |
| 15 | Lasttrum | | |
| 16 | Erste Antriebsriemenscheibe | | |
| 17 | Zweite Antriebsriemenscheibe | | |
| 18 | Leertrum | | |
| 19 | Umlenkrolle | | |
| 19a | Spannrolle | | |
| 20 | Spanneinrichtung | | |
| 21a | Hydromotor | | |
| 21b | Hydromotor | | |
| 22a | Gelenkwelle | | |
| 22b | Gelenkwelle | | |
| 23 | Erste Hydraulikpumpe | | |
| 24 | Zweite Hydraulikpumpe | | |
| 25 | Spanneinrichtung | | |
| 26 | Dritte Hydraulikpumpe | | |

## Patentansprüche

1. Antriebssystem (10) für eine selbstfahrende Erntemaschine (1, 2), umfassend einen als Verbrennungsmotor (9) ausgeführten Antriebsmotor, ein von dem Antriebsmotor angetriebenes Verteilergetriebe (11) mit einer an einer Antriebswelle angeordneten ersten Abtriebsriemenscheibe (12), welche mittels eines ersten Riemens (14) zumindest eine Antriebsriemenscheibe (16, 17) eines Arbeitsorganes (6, 7, 8) treibt, und mindestens eine Hydraulikpumpe (23, 24, 26) zum Antrieb zumindest eines weiteren Arbeitsorganes (4, 5), wobei mittels eines zweiten Riemens (27) das Verteilergetriebe (11) trieblich mit der mindestens einen Hydraulikpumpe (23, 24, 26) verbunden ist, wobei dem Verteilergetriebe (11) eine zweite Abtriebsriemenscheibe (13) zugeordnet ist, die mittels des zweiten Riemens (27) die mindestens eine Hydraulikpumpe (23, 24, 26) antreibt, **dadurch gekennzeichnet, dass**
• das Antriebssystem in einen Hauptantriebsstrang, der unmittelbar mechanisch angetriebene Arbeitsorgane (6, 7, 8) umfasst, und einen Nebenantriebsstrang, der hydraulisch angetriebene Arbeitsorgane (23, 24, 26) umfasst, aufgeteilt ist, und
• der zweite Riemen (27) eine erste Hydraulikpumpe (23) zum Antreiben eines Vorsatzgerätes (4) und eine zweite Hydraulikpumpe (24) zum Antreiben eines Einzugsorganes (5) antreibt.

2. Antriebssystem (10) nach Anspruch 1, **dadurch gekennzeichnet, dass** die zweite Abtriebsriemenscheibe (13) parallel zu der ersten Abtriebsriemenscheibe (12) angeordnet ist.

3. Antriebssystem (10) nach einem der Ansprüche 1 oder 2, **dadurch gekennzeichnet, dass** die erste Hydraulikpumpe (23) und die zweite Hydraulikpumpe (24) als Tandempumpe ausgeführt sind, die von einer gemeinsamen ersten Pumpenantriebsriemenscheibe (28) angetrieben sind.

4. Antriebssystem (10) nach einem der Ansprüche 1 bis 3, **dadurch gekennzeichnet, dass** der zweite Riemen (27) eine zweite Pumpenantriebsriemenscheibe (29) zum Antreiben einer dritten Hydraulikpumpe (26) treibt, die dem Antrieb eines hydraulischen Aufsammelantriebs eines als Pick-Up ausgeführten Vorsatzgerätes (4) dient.

5. Antriebssystem (10) nach Anspruch 4, **dadurch gekennzeichnet, dass** die zweite Pumpenantriebsriemenscheibe (29) durch eine Kupplung schaltbar ist.

6. Antriebssystem (10) nach Anspruch 5, **dadurch gekennzeichnet, dass** die erste Hydraulikpumpe (23), die zweite Hydraulikpumpe (24) und die dritte Hydraulikpumpe (26) auf einer gemeinsamen Konsole (33) angeordnet sind.

7. Feldhäcksler (2) mit einem Antriebssystem (10) nach einem der Ansprüche 1 bis 6.

## Claims

1. A drive system (10) for a self-propelled harvester (1, 2), including a drive engine in the form of an internal combustion engine (9), a distribution transmission (11) which is driven by the drive engine and has a first drive output belt pulley (12) which is arranged on a drive shaft and which drives at least one drive belt pulley (16, 17) of a working member (6, 7, 8) by means of a first belt (14), and at least one hydraulic pump (23, 24, 26) for driving at least one further drive member (4, 5), wherein the distribution transmission (11) is drivingly connected by means of a second belt (27) to the at least one hydraulic pump (23, 24, 26), wherein associated with the distribution transmission (11) is a second drive output belt pulley (13) which drives the at least one hydraulic pump (23, 24, 26) by means of the second belt (27),
**characterised in that**
• the drive system is divided into a main drive train which includes directly mechanically driven working members (6, 7, 8) and a secondary drive train which includes hydraulically driven working members (23, 24, 26), and
• the second belt (27) drives a first hydraulic pump (23) for driving a front-mounted attachment assembly (4) and a second hydraulic pump (24) for driving an intake member (5).

2. A drive system (10) according to claim 1 **characterised in that** the second drive output belt pulley (13) is arranged parallel to the first drive output belt pulley (12).

3. A drive system (10) according to one of claims 1 and 2 **characterised in that** the first hydraulic pump (23) and the second hydraulic pump (24) are in the form of a tandem pump which are driven by a common first pump drive belt pulley (28).

4. A drive system (10) according to one of claims 1 to 3 **characterised in that** the second belt (27) drives a second pump drive belt pulley (29) for driving a third hydraulic pump (26) which serves to drive a hydraulic pick-up drive of a front-mounted attachment assembly (4) in the form of a pick-up.

5. A drive system (10) according to claim 4 **characterised in that** the second pump drive belt pulley (29) is switchable by a clutch.

6. A drive system (10) according to claim 5 **characterised in that** the first hydraulic pump (23), the second hydraulic pump (24) and the third hydraulic pump (26) are arranged on a common mounting bracket (33).

7. A forage harvester (2) comprising a drive system (10) according to one of claims 1 to 6.

## Revendications

1. Système d'entraînement (10) pour une machine de récolte automotrice (1, 2), comprenant un moteur d'entraînement conformé en moteur à combustion interne (9), un boîtier de transfert (11) qui est entraîné par le moteur d'entraînement et qui comprend une première poulie menée (12), laquelle est disposée sur un arbre d'entraînement et entraîne, au moyen d'une première courroie (14), au moins une poulie menante (16, 17) d'un organe de travail (6, 7, 8), et comprenant au moins une pompe hydraulique (23, 24, 26) pour entraîner au moins un autre organe de travail (4, 5), le boîtier de transfert (11) étant relié de manière motrice à la au moins une pompe hydraulique (23, 24, 26) au moyen d'une deuxième courroie (27), au boîtier de transfert (11) étant associée une deuxième poulie menée (13) qui, au moyen de la deuxième courroie (27), entraîne la au moins une pompe hydraulique (23, 24, 26), **caractérisé en ce que**
• le système d'entraînement est divisé en une chaîne de transmission principale, qui comprend des organes de travail (6, 7, 8) entraînés mécaniquement directement, et une chaîne de transmission auxiliaire, qui comprend des organes de travail entraînés hydrauliquement (23, 24, 26), et
• la deuxième courroie (27) entraîne une première pompe hydraulique (23) pour entraîner un outil frontal (4) et une deuxième pompe hydraulique (24) pour entraîner un organe d'alimentation (5).

2. Système d'entraînement (10) selon la revendication 1, **caractérisé en ce que** la deuxième poulie menée (13) est disposée parallèlement à la première poulie menée (12).

3. Système d'entraînement (10) selon une des revendications 1 ou 2, **caractérisé en ce que** la première pompe hydraulique (23) et la deuxième pompe hydraulique (24) sont conformées en pompes tandem qui sont entraînées par une première poulie menante de pompe commune (28).

4. Système d'entraînement (10) selon une des revendications 1 à 3, **caractérisé en ce que** la deuxième courroie (27) entraîne une deuxième poulie menante de pompe (29) pour entraîner une troisième pompe hydraulique (26) qui sert à entraîner un moyen d'entraînement hydraulique de ramassage d'un outil frontal (4) conformé en pick-up.

5. Système d'entraînement (10) selon la revendication 4, **caractérisé en ce que** la deuxième poulie menante de pompe (29) est embrayable par l'intermédiaire d'un accouplement.

6. Système d'entraînement (10) selon la revendication 5, **caractérisé en ce que** la première pompe hydraulique (23), la deuxième pompe hydraulique (24) et la troisième pompe hydraulique (26) sont disposées sur une console commune (33).

7. Ensileuse (2) comprenant un système d'entraînement (10) selon une des revendications 1 à 6.
